# FASCICULE DE BREVET EUROPEEN

(11) **EP 2 445 598 B1**
(45) Date de publication et mention de la délivrance du brevet: **03.04.2013**
(21) Numéro de dépôt: 10745288.0
(22) Date de dépôt: 22.06.2010
(51) Int. Cl.: A63F 3/04, G09B 1/14, G09B 1/20

(54) **ENSEMBLE D'UN DISPOSITIF DE SUPPORT ET DE JETONS POUR UN JEU DE SOCIÉTÉ, DE TYPE JEU DE LETTRES**
SPIELMARKENTRÄGER UND SPIELMARKEN FÜR GESELLSCHAFTSSPIEL, WIE BUCHSTABENSPIEL
TOKEN CARRIER AND TOKEN FOR BOARD GAME, LIKE WORD GAME

(30) Priorité: 24.06.2009 FR 0903067
(43) Date de publication de la demande: 02.05.2012
(73) Titulaire: Alsac, Laurence, 63400 Chamalieres (FR)
(72) Inventeur: Alsac, Laurence, 63400 Chamalieres (FR)
(74) Mandataire: Myon, Gérard Jean-Pierre
(86) Numéro de dépôt international: PCT/FR2010/051262
(87) Numéro de publication internationale: WO 2010/149923

(56) Documents cités:
- EP-A1- 0 076 477
- FR-A1- 2 568 785
- FR-A1- 2 643 282
- FR-A1- 2 726 195
- US-A- 3 117 789
- US-A1- 2008 258 387

## Description

La présente invention a pour objet un ensemble d'un dispositif de support de jetons pour un jeu de société, de type jeu de lettres, et de jetons complémentaires au dispositif de support.

On connaît déjà dans l'état de la technique un dispositif de support de jetons, du type comportant un présentoir longitudinal de support destiné à recevoir des jetons. Un tel présentoir présente habituellement une surface longitudinale destinée à recevoir les jetons et une surface de maintien des jetons en position sensiblement verticale, cette surface de maintien étant sensiblement perpendiculaire à la surface de réception.

US 3117789 décrit un exemple de présentoir pour un jeu de société.

L'utilisation d'un tel présentoir est particulièrement limitée. Cette utilisation est notamment limitée à la présentation d'une seule face des jetons.

L'invention a notamment pour but de remédier à cet inconvénient, en fournissant un dispositif de support de jetons offrant de plus grandes possibilités d'utilisation en ce qui concerne la présentation des jetons.

A cet effet, l'invention a pour objet un ensemble d'un dispositif de support de jetons, notamment pour un jeu de lettres, du type comportant un présentoir longitudinal de support destiné à recevoir des jetons, et d'au moins un jeton, caractérisé en ce que le dispositif comporte un socle, portant le présentoir par l'intermédiaire d'une liaison mobile présentant au moins un degré de liberté en rotation, et en ce que le jeton comporte au moins deux faces opposées, chacune de ces faces étant munie d'un symbole identique, par exemple d'une lettre, ces symboles étant symétriques l'un par rapport à l'autre, d'axe vertical.

Grâce à cette liaison mobile, le présentoir peut être orienté de façon à présenter un côté ou l'autre des jetons à un utilisateur. Ce dispositif de support offre donc de nouvelles dimensions à un jeu de société du type jeu de lettres, les deux faces du jeton étant utilisables.

En particulier, les symboles étant identiques et symétriques l'un par rapport à l'autre par rapport à un axe vertical, il est possible, lorsque les symboles comportent des lettres, de former des mots dans deux sens de lecture. On passe alors d'un sens de lecture à l'autre en faisant pivoter le support.

Un ensemble selon l'invention peut en outre comporter l'une ou plusieurs des caractéristiques suivantes.
- Le socle présente au moins trois points d'appui définissant une surface d'appui sur une surface horizontale propre à assurer un équilibre stable du dispositif, la liaison mobile étant une liaison pivot d'axe perpendiculaire à la surface d'appui.
- La liaison pivot comporte un arbre cylindrique, porté par le présentoir, et un palier complémentaire ménagé dans le socle.
- Le présentoir est assemblé de façon amovible avec le socle.
- Le présentoir est un rail comportant une surface longitudinale, destinée à recevoir les jetons, et deux rebords latéraux disposés longitudinalement de part et d'autre de la surface longitudinale, de sorte que ce rail présente une section transversale en U.
- Le présentoir forme une glissière, sur laquelle les jetons sont destinés à coulisser, présentant une section transversale en T.
- Le jeton a une forme de prisme de section transversale triangulaire isocèle, dont la base est destinée à coopérer avec un rail à section transversale en U tel que défini précédemment.
- L'un choisi entre le présentoir et le jeton forme une glissière présentant une section transversale en T, l'autre choisi entre le présentoir et le jeton étant muni d'une encoche de forme complémentaire de celle de la glissière, de sorte que le jeton est susceptible de coulisser le long du présentoir.

L'invention sera mieux comprise à la lecture de la description qui va suivre, donnée uniquement à titre d'exemple et faite en se référant aux figures annexées dans lesquelles :
- la figure 1 est une vue en perspective d'un dispositif de support de jetons selon un premier mode de réalisation de l'invention ;
- les figures 2 et 3 sont des vues de face selon une même direction du dispositif de la figure 1 présentant respectivement un côté ou l'autre des jetons qu'il supporte ;
- la figure 4 est une vue similaire à celle de la figure 1 d'un dispositif de support de jetons selon un deuxième mode de réalisation de l'invention.

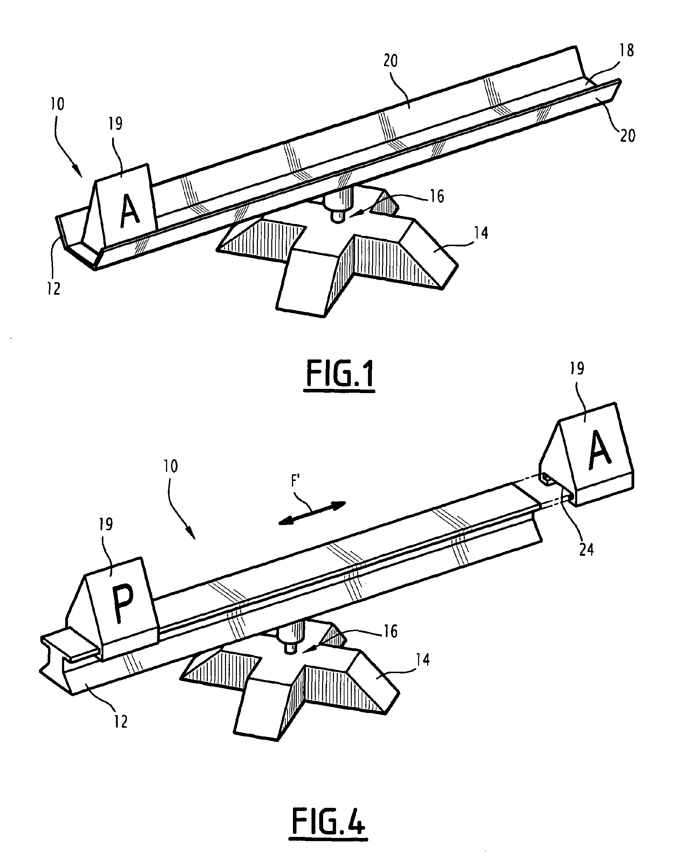

On a représenté sur la figure 1 un dispositif 10 de support de jetons selon un premier mode de réalisation de l'invention. Ce dispositif de support 10 comporte un présentoir longitudinal 12 et un socle 14, portant le présentoir 12 par l'intermédiaire d'une liaison mobile 16 présentant au moins un degré de liberté en rotation, de préférence un unique degré de liberté en rotation.

Conformément à ce premier mode de réalisation représenté, le présentoir 12 a une forme de rail comportant une surface longitudinale de réception 18, destiné à recevoir des jetons 19, et deux rebords latéraux 20 disposés longitudinalement de part et d'autre de la surface de réception 18, de sorte que ce rail présente une forme de canal de section transversale en U.

Les rebords latéraux 20 permettent notamment le maintien des jetons 19 portés en évitant qu'ils puissent tomber de part et d'autre du présentoir 12.

Les jetons 19 ont par exemple une forme de prisme droit à base triangulaire isocèle. En plus de faces latérales ayant la forme de la base, le prisme est délimité par une face de support rectangulaire et deux faces opposées de présentation.

La face de support de chaque jeton 19 a une largeur inférieure ou égale à la largeur de la surface de réception 18 du présentoir 12, de sorte que les jetons 19 peuvent être disposés sur cette surface de réception 18. La longueur de la face de support de chaque jeton 19 dépend de la longueur de la surface de réception 18 ainsi que du nombre maximal de jetons 19 qu'on souhaite pouvoir placer sur le présentoir 12. Par exemple, la longueur des faces de support des jetons 19 sont adaptées pour que le présentoir puisse recevoir un maximum de huit jetons.

Chacune de ces faces de présentation est munie d'un symbole, par exemple d'une lettre, d'une couleur ou d'un dessin. Chaque symbole peut être inscrit par des moyens classiques sur les jetons, par exemple par impression d'encre, découpe au laser, sérigraphie, dépose d'un autocollant, gravure etc.

Les deux faces de présentation de chaque jeton 19 sont munies d'un même symbole, par exemple de la même lettre. En particulier, les lettres des deux faces de présentation sont symétriques axialement l'une par rapport à l'autre, d'axe vertical, par exemple d'axe médian du jeton 19. Ainsi, la même lettre est lisible de la même manière en cas de rotation à 180° du jeton autour d'un axe vertical.

Le socle 14 est notamment destiné à assurer un équilibre stable du dispositif 10. A cet effet, le socle 14 présente au moins trois points d'appui, définissant une surface d'appui sur une surface horizontale plane.

Ce socle 14 peut avoir n'importe quelle forme adaptée pour assurer cet équilibre. Dans l'exemple représenté, le socle 14 est un polyèdre présentant une face de support en croix. En variante non illustrée, il s'agit d'un disque. Par ailleurs, la masse de ce socle 14 doit être suffisante pour rester immobile même lorsque le présentoir 12 est en rotation autour de l'axe de la liaison pivot 16.

Conformément au mode de réalisation représenté, le présentoir longitudinal 12 est agencé horizontalement, et la liaison mobile 16 est une liaison pivot d'axe perpendiculaire à la surface d'appui du socle 14. De préférence, l'axe vertical de pivot coupe la surface de réception 18 au centre de cette surface de réception 18.

Par exemple, la liaison pivot comporte un arbre cylindrique porté par le présentoir 12 et un palier complémentaire ménagé dans le socle 14.

De préférence, la liaison pivot 16 est démontable, de sorte que le présentoir 12 est assemblé de façon amovible avec le socle 14. Ceci permet de faciliter le rangement du dispositif de support 10, par exemple dans une boite de jeu de société.

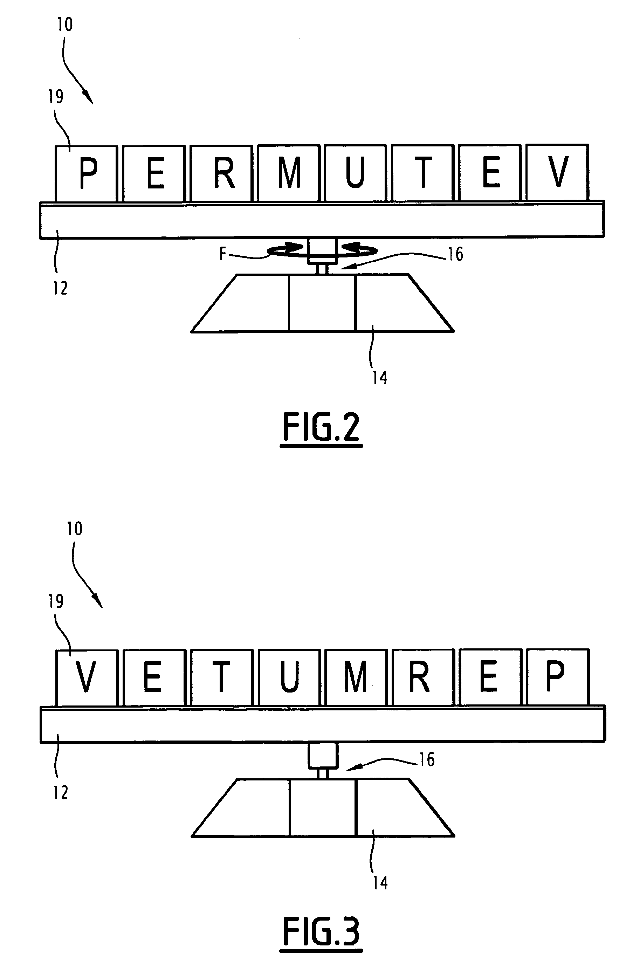

Grâce à cette liaison pivot 16, le présentoir longitudinal 12 peut pivoter, selon la double flèche F, de manière simple autour d'un axe central de façon à présenter l'un ou l'autre des côtés de présentation des jetons 19 qu'il porte, comme cela est représenté sur les figures 3 et 4.

Il est ainsi possible à l'utilisateur de lire des mots, formés par les lettres portées par les jetons 19, dans un sens ou dans l'autre, simplement en faisant pivoter le présentoir 12 autour de la liaison pivot 16. On peut ainsi prévoir par exemple des règles de jeu de lettres dans lesquelles il faut former des mots lisibles dans un sens ou dans l'autre sur le présentoir 12.

On a représenté sur la figure 5 un dispositif de support 10 selon un deuxième mode de réalisation de l'invention. Sur cette figure, les éléments analogues à ceux des figures précédentes sont désignés par des références identiques.

Conformément à ce deuxième mode de réalisation, le présentoir 12 forme une glissière présentant une section transversale en T, sur laquelle les jetons 19 sont destinés à coulisser.

A cet effet, chaque jeton 19 a par exemple une forme générale de prisme droit de base triangulaire isocèle, et est muni d'une encoche 24 de forme complémentaire de celle de la glissière 12, de sorte que le jeton 19 est susceptible de coulisser, selon la double flèche F', le long de cette glissière. Ce mode de réalisation a notamment pour avantage de n'autoriser l'ajout ou le retrait de jetons 19 sur le présentoir 12 que selon une direction longitudinale de ce présentoir 12.

On notera que l'invention n'est pas limitée au mode de réalisation précédemment décrit mais pourrait présenter des variantes sans sortir du cadre des revendications. On pourrait notamment envisager n'importe quelles formes de présentoir et de jetons adaptées.

Par exemple, les jetons pourraient porter une glissière de section transversale en T, alors que le présentoir présenterait une encoche de forme complémentaire, dans laquelle les jetons pourraient être insérés. En variante, le présentoir a une section transversale en U. La base du jeton a une forme complémentaire adaptée pour coiffer un tel présentoir.

De même, le présentoir pourrait ne présenter qu'une surface de réception, alors que les jetons présenteraient des rebords transversaux de part et d'autre de sa face de support, destinés à être disposés de part et d'autre de la surface de réception lorsque le jeton est posé sur le présentoir.

Conformément à une autre variante envisageable, les jetons pourraient avoir une forme de parallélépipède rectangle et pourraient être maintenus à la fois par le haut et par le bas sur un présentoir susceptible de pivoter autour d'un axe horizontal et parallèle à une direction longitudinale du présentoir.

Dans un autre mode de réalisation non illustré, les extrémités de la glissière 12 sont pourvues d'un organe de fermeture, par exemple des goupilles insérées dans des trous ménagés dans la paroi de la glissière.

## Revendications

1. Ensemble d'un dispositif (10) de support de jetons (19), notamment pour un jeu de lettres, du type comportant un présentoir longitudinal (12) de support destiné à recevoir des jetons (19), et d'au moins un jeton (19) le jeton (19) comportant au moins deux faces opposées, le dispositif comportant un socle (14), portant le présentoir (12) par l'intermédiaire d'une liaison mobile (16) présentant au moins un degré de liberté en rotation, **caractérisé en ce que** : chacune des faces opposées du jeton (19) est
- chacune des faces opposées du jeton (19 est munie d'un symbole identique, par exemple d'une lettre, ces symboles étant symétriques l'un par rapport à l'autre, d'axe vertical,
- la liaison mobile (16) autorise le pivotement du présentoir (12) pour présenter une face ou l'autre du jeton (19).

2. Ensemble selon la revendication 1, dans lequel le socle (14) présente au moins trois points d'appui définissant une surface d'appui sur une surface horizontale propre à assurer un équilibre stable du dispositif (10), la liaison mobile (16) étant une liaison pivot d'axe perpendiculaire à la surface d'appui.

3. Ensemble selon la revendication 2, dans lequel la liaison pivot (16) comporte un arbre cylindrique, porté par le présentoir (12), et un palier complémentaire ménagé dans le socle (14).

4. Ensemble selon l'une quelconque des revendications 1 à 3, dans lequel le présentoir (12) est assemblé de façon amovible avec le socle (14).

5. Ensemble selon l'une quelconque des revendications 1 à 4, dans lequel le présentoir (12) est un rail comportant une surface longitudinale de réception (18), destinée à recevoir les jetons (19), et deux rebords latéraux (20) disposés longitudinalement de part et d'autre de la surface de réception (18), de sorte que ce rail présente une section transversale en U.

6. Ensemble selon l'une quelconque des revendication 1 à 4, dans lequel le présentoir (12) forme une glissière, sur laquelle les jetons (19) sont destinés à coulisser, présentant une section transversale en T.

7. Ensemble selon la revendication 5, dans lequel le jeton (19) a une forme de prisme de section transversale triangulaire isocèle, dont la base est destinée à coopérer avec le rail (12).

8. Ensemble selon l'une quelconque des revendications précédentes, dans lequel l'un choisi entre le présentoir (12) et le jeton (19) forme une glissière présentant une section transversale en T, l'autre choisi entre le présentoir (12) et le jeton (19) étant muni d'une encoche (24) de forme complémentaire de celle de la glissière (12), de sorte que le jeton (19) est susceptible de coulisser le long du présentoir (12).

## Claims

1. Set consisting of a device (10) for supporting tokens (19), especially for a letter game, of the type comprising a longitudinal supporting display unit (12), which is intended to receive tokens (19), and of at least one token (19), said token (19) comprising at least two opposed faces, said device comprising a base (14) which carries the display unit (12) via a movable connection (16) having at least a degree of freedom in rotation, **characterised in that**:
- each of the opposed faces of the token (19) is provided with an identical symbol, for example with a letter, the said symbols being symmetrical in relation to one another, with a vertical axis,
- the movable connection (16) allows pivoting of the display unit (12) in order to display one or other face of the token (19).

2. Set according to claim 1, wherein the base (14) has at least three bearing points defining a surface for bearing on a horizontal surface suitable for ensuring a stable balance of the device (10), the movable connection (16) being a pivot-type connection with an axis which is perpendicular to the bearing surface.

3. Set according to claim 2, wherein the pivot-type connection (16) comprises a cylindrical shaft carried by the display unit (12), and a complementary bearing arranged in the base (14).

4. Set according to any of claims 1 to 3, wherein the display unit (12) is fitted to the base (14) in a detachable manner.

5. Set according to any of claims 1 to 4, wherein the display unit (12) is a rail comprising a longitudinal receiving surface (18), which is intended to receive the tokens (19), and two lateral edges (20) which are disposed longitudinally on either side of the receiving surface (18) in such a way that the said rail has a U-shaped cross-section.

6. Set according to any of claims 1 to 4, wherein the display unit (12) forms a track on which the tokens (19) are intended to slide and which has a T-shaped cross-section.

7. Set according to claim 5, wherein the token (19) has the shape of a prism with an isosceles triangle-shaped cross-section, the base of which is intended to cooperate with the rail (12).

8. Set according to any of the preceding claims, wherein the one which is chosen between the display unit (12) and the token (19) forms a track having a T-shaped cross-section, the other which is chosen between the display unit (12) and the token (19) being provided with a slot (24) having a shape which is complementary with that of the track (12) in such a way that the token (19) is capable of sliding along the display unit (12).

## Patentansprüche

1. Anordnung einer Vorrichtung (10) zum Abstützen von Spielsteinen (19), insbesondere für ein Buchstabenspiel, die einen längs gerichteten Trägeraufsteller (12) umfasst, der dazu dient, Spielsteine (19) aufzunehmen, und mindestens eines Spielsteins (19), wobei der Spielstein (19) mindestens zwei entgegengesetzt gerichtete Flächen aufweist, die Vorrichtung einen Sockel (14) umfasst, der den Aufsteller (12) über eine bewegliche Verbindung (16) trägt, die mindestens einen rotatorischen Freiheitsgrad aufweist, **dadurch gekennzeichnet, dass**
- jede der entgegengesetzt gerichteten Flächen des Spielsteins (19) mit einem identischen Symbol, zum Beispiel einem Buchstaben, ausgerüstet ist, wobei diese Symbole zueinander bezüglich der vertikalen Achse symmetrisch sind,
- die bewegliche Verbindung (16) das Schwenken des Aufstellers (12) zum Anzeigen der einen oder der anderen Fläche des Spielsteins (19) zulässt.

2. Anordnung nach Anspruch 1, bei der der Sockel (14) mindestens drei Auflageflächen aufweist, die eine Auflagefläche auf einer horizontalen Fläche definieren, die geeignet ist, ein stabiles Gleichgewicht der Vorrichtung (10) sicherzustellen, wobei die bewegliche Verbindung (16) eine Schwenkverbindung um eine Achse senkrecht zur Auflagefläche ist.

3. Anordnung nach Anspruch 2, bei der die Schwenkverbindung (16) eine zylindrische Achse, die von dem Aufsteller (12) getragen wird, und ein komplementäres Lager aufweist, das im Sockel (14) angeordnet ist.

4. Anordnung nach einem beliebigen der Ansprüche 1 bis 3, bei der der Aufsteller (12) in lösbarer Weise mit dem Sockel (14) zusammengefügt ist.

5. Anordnung nach einem beliebigen der Ansprüche 1 bis 4, bei der der Aufsteller (12) eine Schiene ist, die eine längsgerichtete, zur Aufnahme der Spielsteine (19) dienende Aufnahmefläche (18) und zwei seitliche Ränder (20) umfasst, die in Längsrichtung beidseitig der Aufnahmefläche (18) angeordnet sind, derart, dass diese Schiene einen U-förmigen Querschnitt aufweist.

6. Anordnung nach einem beliebigen der Ansprüche 1 bis 4, bei der der Aufsteller (12) eine Gleitschiene bildet, die einen T-förmigen Querschnitt aufweist und auf der die Spielsteine (19) bestimmt sind, zu gleiten.

7. Anordnung nach Anspruch 5, bei der der Spielstein (19) eine Form eines Prismas mit dreieckigem gleichschenkligen Querschnitt aufweist, dessen Grundfläche ausersehen ist, mit der Schiene (12) zusammenzuarbeiten.

8. Anordnung nach einem beliebigen der vorhergehenden Ansprüche, bei der eines der Teile Aufsteller (12) und Spielstein (19) einen T-förmigen Querschnitt aufweist und das andere der Teile Aufsteller (12) und Spielstein (19) mit einer Ausnehmung (24) von zu der Form der Gleitschiene (12) komplementärer Form ausgerüstet ist, derart, dass der Spielstein (19) geeignet ist, längs des Aufstellers (12) zu gleiten.
